# EUROPEAN PATENT APPLICATION

(11) **EP 4 633 277 A1**
(43) Date of publication of application: **15.10.2025**
(21) Application number: 25169214.1
(22) Date of filing: 08.04.2025
(51) Int. Cl.: H04W 74/08, H04W 74/0833

(54) **METHOD AND APPARATUS FOR SELECTING CONTENTION BASED RESOURCE OF TERMINAL**

(30) Priority: 09.04.2024 KR 20240048345; 25.03.2025 KR 20250037878
(71) Applicant: KT Corporation, Seongnam-si, Gyeonggi-do 13606 (KR)
(72) Inventor: LEE, Eun Jong, 13606 Seongnam-si, Gyeonggi-do (KR); PARK, Kyujin, 13606 Seongnam-si, Gyeonggi-do (KR)
(74) Representative: BCKIP Part mbB

(57) **Abstract**

Provided are a method and apparatus for selecting contention resources of a terminal in a wireless communication system. A terminal receives, from a reader, at least one contention resource information distinguished by time and frequency resources, select at least one contention resource based on the received at least one contention resource information. Then, the terminal transmits, to the reader, a first message on a first frequency resource in a time domain corresponding to the selected at least one contention resource. The first message includes information triggered by the received at least one contention resource information. Thereafter, the terminal receives, from the reader, a second message in response to the transmitted first message.

## Description

### CROSS-REFERENCE TO RELATED THE APPLICATION

This application is based on and claims priority on Patent Application No. 10-2024-0048345 filed on Apr. 9, 2024 and No. 10-2025-0037878 filed on Mar. 25, 2025 in the Korean Intellectual Property Office.

### BACKGROUND

### Technical Field

The present disclosure relates to wireless communication applicable to 5G NR, 5G-Advanced and 6G.

### Description of the Related Art

With the increase in the number of communication devices, there is a consequent rise in communication traffic that needs to be managed. To handle this increased communication traffic, a next generation 5G system, which is an enhanced mobile broadband communication system compared to the exiting LTE system, has become necessary. Such a next generation 5G system has been developed based on scenarios which are classified into Enhanced Mobile BroadBand (eMBB), Ultra-reliable and low-latency communication (URLLC), Massive Machine-Type Communications (mMTC), and the like.

eMBB, URLLC, and mMTC represent next generation mobile communication scenarios. eMBB is characterized by high spectral efficiency, high user experienced data rate, high peak data. URLLC is characterized by ultra-reliability, ultra-low latency, ultra-high availability (e.g., vehicle-to-everything (V2X), Emergency Service, Remote Control). mMTC is characterized by low cost, low energy consumption, short packet transmission, and massive connectivity (e.g., Internet of Things (IoT)).

### SUMMARY

The disclosure is to provide a method and apparatus for enabling a terminal to efficiently select contention resources when transmitting data using a random access scheme in a wireless communication system.

According to an embodiment, a method of a terminal may be provided for operating in a wireless communication system. The method of the terminal may include receiving, from a reader, at least one contention resource information distinguished by time and frequency resources, selecting at least one contention resource based on the received at least one contention resource information, and transmitting, to the reader, a first message on a first frequency resource in a time domain corresponding to the selected at least one contention resource, wherein the first message includes information triggered by the received at least one contention resource information. The method of the terminal may further include receiving, from the reader, a second message in response to the transmitted first message.

According to another embodiment, a method of a reader may be provided for operating in a wireless communication system. The method of the reader may include transmitting, to a terminal, at least one contention resource information distinguished by time and frequency resources, and receiving, from the terminal, a first message on a first frequency resource in a time domain corresponding to at least one contention resource based on the transmitted at least one contention resource information, wherein the first message includes information triggered by the received at least one contention resource information. The method of the reader may further include transmitting, to the terminal, a second message in response to the received first message.

According to a further another embodiment, a terminal may be provided for operating in a wireless communication system. The terminal may include at least one processor; and at least one memory configured to store instructions and operably electrically connectable to the at least one processor, wherein operations performed based on the instructions executed by the at least one processor include: receiving, from a reader, at least one contention resource information distinguished by time and frequency resources, selecting at least one contention resource based on the received at least one contention resource information, and transmitting, to the reader, a first message on a first frequency resource in a time domain corresponding to the selected at least one contention resource, wherein the first message includes information triggered by the received at least one contention resource information. The operations performed based on the instructions executed by the at least one processor further include: receiving, from the reader, a second message in response to the transmitted first message.

According to still another embodiment, a reader may be provided for operating in a wireless communication system. The reader may include at least one processor; and at least one memory configured to store instructions and operably electrically connectable to the at least one processor, wherein operations performed based on the instructions executed by the at least one processor include: transmitting, to a terminal, at least one contention resource information distinguished by time and frequency resources, and receiving, from the terminal, a first message on a first frequency resource in a time domain corresponding to at least one contention resource based on the transmitted at least one contention resource information, wherein the first message includes information triggered by the received at least one contention resource information. The operations performed based on the instructions executed by the at least one processor further include: transmitting, to the terminal, a second message in response to the received first message.

The second message may be used as a response to multiple first messages from different terminals.

Meanwhile, the reception of the second message may be determined as successful based on the triggered information. Through this, the terminal may transmit a third message based on the first frequency resource on which the first message was transmitted. Alternatively, the terminal may transmit a third message to the reader based on a second frequency resource, wherein information on the second frequency resource may be included in the second message.

The triggered information included in the first message may be randomly selected random number information within a random number range. Here, the random number range may be distinguished according to a frequency domain and set to different non-overlapping values.

### BRIEF DESCRIPTION OF THE DRAWINGS

FIG. 1 is a diagram illustrating a wireless communication system.
FIG. 2 is a diagram illustrating a structure of a radio frame used in new radio (NR).
FIGS. 3A to 3C illustrate exemplary architectures for a wireless communication service.
FIG. 4 illustrates a slot structure of an NR frame.
FIG. 5 shows an example of a subframe type in NR.
FIG. 6 illustrates a structure of a self-contained slot.
FIGS. 7A to 7E illustrate examples of connectivity topologies for ambient IoT networks and devices.
FIGS. 8A to 8B illustrate an example of a random access procedure for RFID.
FIG. 9 is a flowchart illustrating an operation method of a terminal according to an embodiment of the disclosure.
FIG. 10 is a diagram for explaining an operation scheme based on Random access Occasions (ROs) and slots according to an embodiment of the disclosure.
FIG. 11 is a diagram for explaining a random access scheme according to an embodiment of the disclosure.
FIG. 12 is a diagram for explaining a random access scheme according to another embodiment of the disclosure.
FIG. 13 is a diagram for explaining a random access scheme according to still another embodiment of the disclosure.
FIG. 14 is a flowchart illustrating an operation method of a terminal according to another embodiment of the disclosure.
FIG. 15 is a flowchart illustrating an operation method of a reader according to an embodiment of the disclosure.
FIG. 16 is a block diagram showing apparatuses according to an embodiment of the disclosure.
FIG. 17 is a block diagram showing a terminal according to an embodiment of the disclosure.
FIG. 18 is a block diagram of a processor in accordance with an embodiment.
FIG. 19 is a detailed block diagram of a transceiver of a first apparatus shown in FIG. 16 or a transceiving unit of an apparatus shown in FIG. 17.

### DETAILED DESCRIPTION

The technical terms used in this document are for merely describing specific embodiments and should not be considered limiting the embodiments of disclosure. Unless defined otherwise, the technical terms used in this document should be interpreted as commonly understood by those skilled in the art but not too broadly or too narrowly. If any technical terms used here do not precisely convey the intended meaning of the disclosure, they should be replaced with or interpreted as technical terms that accurately understood by those skilled in the art. The general terms used in this document should be interpreted according to their dictionary definitions, without overly narrow interpretations.

The singular form used in the disclosure includes the plural unless the context dictates otherwise. The term 'include' or 'have' may represent the presence of features, numbers, steps, operations, components, parts or the combination thereof described in the disclosure. The term 'include' or 'have' may not exclude the presence or addition of another feature, another number, another step, another operation, another component, another part or the combination thereof.

The terms 'first' and 'second' are used to describe various components without limiting them to these specific terms. The terms 'first' and 'second' are only used to distinguish one component from another component. For example, a first component may be named as a second component without departing from the scope of the disclosure.

When an element or layer is referred to as being "connected to" or "coupled to" another element or layer, it may be directly connected or coupled to the other element or layer, there might be intervening elements or layers. In contrast, when an element or layer is referred to as being "directly connected to" or "directly coupled to" another element or layer, there are no intervening elements or layers.

Hereinafter, the exemplary embodiments of the disclosure will be described in detail with reference to the accompanying drawings. In describing the disclosure, for ease of understanding, the same reference numerals will be used throughout the drawings for the same components, and repetitive description on these components will be omitted. Detailed description on well-known arts that may obscure the essence of the disclosure will be omitted. The accompanying drawings are provided to merely facilitate understanding of the embodiment of disclosure and should not be seen as limiting. It should be recognized that the essence of this disclosure extends the illustrations, encompassing, replacements or equivalents in variations of what is shown in the drawings.

In this disclosure, "A or B" may mean "only A", "only B", or "both A and B". In other words, "A or B" in the disclosure may be interpreted as "A and/or B". For example, "A, B or C" may mean "only A", "only B", "only C", or "any combination of A, B and C".

In this disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In this disclosure, "at least one of A and B" may mean "only A", "only B" or "both A and B". In addition, "at least one of A or B" or "at least one of A and/or B" may be interpreted as the same as "at least one of A and B".

In addition, "at least one of A, B and C" may mean "only A", "only B", "only C", or "any combination of A, B and C". Further, "at least one of A, B or C" or "at least one of A, B and/or C" may mean "at least one of A, B and C".

Also, parentheses used in this disclosure may mean "for example". For example, "control information (PDCCH)" may mean that "PDCCH" is an example of "control information". However, "control information" in this disclosure is not limited to "PDCCH". As another example, "control information (i.e., PDCCH)", may also mean that "PDCCH" is an example of "control information".

Each of the technical features described in one drawing in this disclosure may be implemented independently or simultaneously.

In the accompanying drawings, user equipment (UE) is illustrated as an example and may be referred to as a terminal, mobile equipment (ME), and the like. UE may be a portable device such as a laptop computer, a mobile phone, a personal digital assistance (PDA), a smart phone, a multimedia device, or the like. UE may be a non-portable device such as a personal computer (PC) or a vehicle-mounted device.

Hereinafter, the UE may be as an example of a device capable of wireless communication. The UE may be referred to as a wireless communication device, a wireless device, or a wireless apparatus. The operation performed by the UE may be applicable to any device capable of wireless communication. A device capable of wireless communication may also be referred to as a radio communication device, a wireless device, or a wireless apparatus.

A base station generally refers to a fixed station that communicates with a wireless device. The base station may include an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), and the repeater(relay).

While embodiments of the disclosure are described based on an long term evolution (LTE) system, an LTE-advanced (LTE-A) system, and an new radio (NR) system, such embodiments may be applicable to any communication system that fits the described criteria.

### <Wireless Communication System>

With the success of long-term evolution (LTE)/LTE-A (LTE-Advanced) for the 4th generation mobile communication, the next generation mobile communication (e.g., 5th generation: also known as 5G mobile communication) has been commercialized and the follow-up studies are also ongoing.

The 5th generation mobile communications, as defined by the International Telecommunication Union (ITU), provide a data transmission rate of up to 20 Gbps and a minimum actual transmission rate of at least 100 Mbps anywhere. The official name of the 5th generation mobile telecommunications is 'IMT-2020'.

ITU proposes three usage scenarios: enhanced Mobile Broadband (eMBB), massive Machine Type Communication (mMTC) and Ultra Reliable and Low Latency Communications (URLLC).

URLLC is a usage scenario requiring high reliability and low latency. For example, services such as automatic driving, factory automation, augmented reality require high reliability and low latency (e.g., a delay time of less than 1 ms). The delay time of current 4G (e.g., LTE) is statistically about 21 to 43 ms (best 10%) and about 33 to 75 ms (median), which insufficient to support services requiring a delay time of about 1 ms or less. Meanwhile, eMBB is a usage scenario that requires mobile ultra-wideband.

That is, the 5G mobile communication system offers a higher capacity compared to current 4G LTE. The 5G mobile communication system may be designed to increase the density of mobile broadband users and support device to device (D2D), high stability, and machine type communication (MTC). 5G research and development focus on achieving lower latency times and lower battery consumption compared to 4G mobile communication systems, enhancing the implementation of the Internet of things (IoTs). A new radio access technology, known as new RAT or NR, may be introduced for such 5G mobile communication.

An NR frequency band is defined to include two frequency ranges FR1 and FR2. Table 1 below shows an example of the two frequency ranges FR1 and FR2. However, the numerical values associated with each frequency range may be subject to change, and the embodiments are not limited thereto. For convenience of description, FR1 in the NR system may refer to a Sub-6 GHz range, and FR2 may refer to an above-6 GHz range, which may be called millimeter waves (mmWs).

**[Table 1]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

The numerical values of the frequency ranges may be subject to change in the NR system. For example, FR1 may range from about 410 MHz to 7125 MHz as listed in [Table 1]. That is, FR1 may include a frequency band of 6 GHz (or 5850, 5900, and 5925 MHz) or higher. For example, the frequency band of 6 GHz (or 5850, 5900, and 5925 MHz) or higher may include an unlicensed band. The unlicensed band may be used for various purposes, for example, vehicle communication (e.g., autonomous driving).

The 3GPP communication standards define downlink (DL) physical channels and DL physical signals. DL physical channels are related to resource elements (REs) that convey information from a higher layer while DL physical signals, used in the physical layer, correspond to REs that do not carry information from a higher layer. For example, DL physical channels include physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH). DL physical signals include reference signals (RSs) and synchronization signals (SSs). A reference signal (RS) is also known as a pilot signal and has a predefined special waveform known to both a gNode B (gNB) and a UE. For example, DL RSs include cell specific RS, UE-specific RS (UE-RS), positioning RS (PRS), and channel state information RS (CSI-RS). The 3GPP LTE/LTE-A standards also define uplink (UL) physical channels and UL physical signals. UL channels correspond to REs with information from a higher layer. UL physical signals are used in the physical layer and correspond to REs which do not carry information from a higher layer. For example, UL physical channels include physical uplink shared channel (PUSCH), physical uplink control channel (PUCCH), and physical random access channel (PRACH). UL physical signals include a demodulation reference signal (DMRS) for a UL control/data signal, and a sounding reference signal (SRS) used for UL channel measurement.

In this disclosure, PDCCH/PCFICH/PHICH/PDSCH refers to a set of time-frequency resources or a set of REs carrying downlink control information (DCI)/a control format indicator (CFI)/a DL acknowledgement/negative acknowledgement (ACK/NACK)/DL data. Further, PUCCH/PUSCH/PRACH refers to a set of time-frequency resources or a set of REs carrying UL control information (UCI)/UL data/a random access signal.

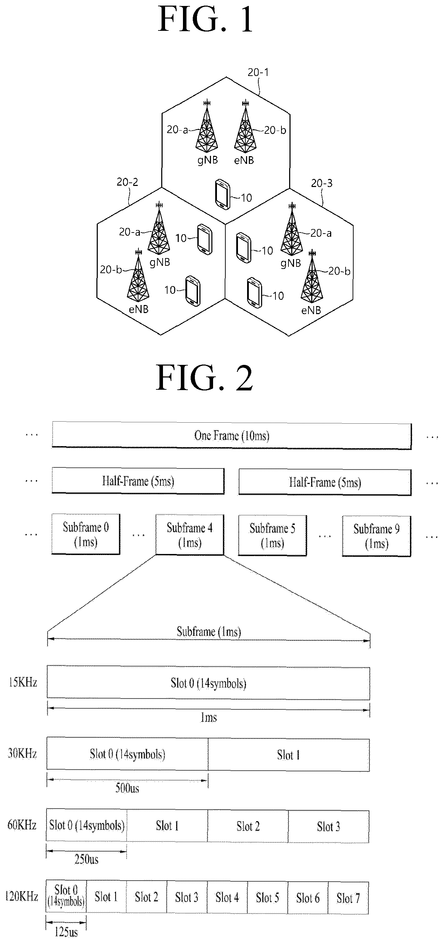

FIG. 1 is a diagram illustrating a wireless communication system.

Referring to FIG. 1, the wireless communication system may include at least one base station (BS). For example, the BSs may include a gNodeB (or gNB) 20a and an eNodeB (or eNB) 20b. The gNB 20a supports 5G mobile communication. The eNB 20b supports 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A user equipment (UE) typically belongs to one cell, and the cell to which the UE belongs is called a serving cell. A base station providing a communication service to a serving cell is referred to as a serving base station (serving BS). Since the wireless communication system is a cellular system, there are other cells adjacent to the serving cell. The other cell adjacent to the serving cell is referred to as a neighbor cell. A base station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, a transmitter may be a part of the base station 20, and a receiver may be a part of the UE 10. In the uplink, the transmitter may be a part of the UE 10, and the receiver may be a part of the base station 20.

In a wireless communication system, there are primarily two schemes: frequency division duplex (FDD) scheme and time division duplex (TDD) scheme. In the FDD scheme, uplink transmission and downlink transmission occur on different frequency bands. Conversely, the TDD scheme allows both uplink transmission and downlink transmission to use the same frequency band, but at different times. A key characteristic of the TDD scheme is the substantial reciprocity of the channel response, meaning that the downlink channel response and the uplink channel response are almost identical within a given frequency domain. This reciprocity in TDD-based radio communication systems enables the estimation of the downlink channel response from the uplink channel response. In the TDD scheme, since uplink transmission and downlink transmission are time-divided in the entire frequency band, it is not possible to simultaneously perform downlink transmission by the base station and uplink transmission by the UE. In a TDD system where uplink transmission and downlink transmission are divided into subframe units, uplink transmission and downlink transmission are performed in different subframes.

FIG. 2 is a diagram illustrating a structure of a radio frame used in new radio (NR).

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on the subcarrier spacing (SCS). Each slot includes 12 or 14 OFDM(A) symbols according to a Cyclic Prefix (CP). With a normal CP, a slot includes 14 OFDM symbols. With an extended CP, a slot includes 12 OFDM symbols. A symbol may include an OFDM symbol (CP-OFDM symbol) and an SC-FDMA symbol (or DFT-s-OFDM symbol).

### <Support of Various Numerologies>

As wireless communication technology advances, the NR system may offer various numerologies to terminals. For example, when a subcarrier spacing (SCS) is set at 15 kHz, it supports a broad range of the typical cellular bands. When a subcarrier spacing (SCS) is set at 30 kHz/60 kHz, it supports a dense-urban, lower latency, wider carrier bandwidth. When the SCS is 60 kHz or higher, it supports a bandwidth greater than 24.25 GHz in order to overcome phase noise.

These numerologies may be defined by the cyclic prefix (CP) length and the SCS. A single cell in the NR system is capable of providing multiple numerologies to terminals. Table 2 below shows the relationship between the subcarrier spacing, corresponding CP length, and the index of a numerology (represented by µ).

**[Table 2]**

| µ | Δf=2^{µ}·15 [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

Table 3 below shows the number of OFDM symbols per slot (N^{slot}_{symb}), the number of slots per frame (N^{frame,µ}ₛₗₒₜ), and the number of slots per subframe (N^{subframe,µ}ₛₗₒₜ) according to each numerology expressed by µ in the case of a normal CP.

**[Table 3]**

| µ | Δf=2^{µ}·15 [kHz] | N^{slot}_{symb} | N^{frame,µ}ₛₗₒₜ | N^{subframe,µ}ₛₗₒₜ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

Table 4 below shows the number of OFDM symbols per slot (N^{slot}_{symb}), the number of slots per frame (N^{frame,µ}ₛₗₒₜ), and the number of slots per subframe (N^{subframe,µ}ₛₗₒₜ) of a numerology represented by µ in the case of an extended CP.

**[Table 4]**

| µ | SCS (15*2^{u}) | N^{slot}_{symb} | N^{frame,µ}ₛₗₒₜ | N^{subframe,µ}ₛₗₒₜ |
|---|---|---|---|---|
| 2 | 60KHz (u=2) | 12 | 40 | 4 |

In the NR system, OFDM(A) numerologies (e.g., SCS, CP length, and so on) may be configured differently across multiple cells that are integrated with a single terminal. Accordingly, the duration of time resource may vary among these integrated cells. Here, the duration may be referred to as a section. The time resource may include a subframe, a slot or a transmission time interval (TTI). Further, the time resource may be collectively referred to as a time unit (TU) for simplicity and include the same number of symbols.

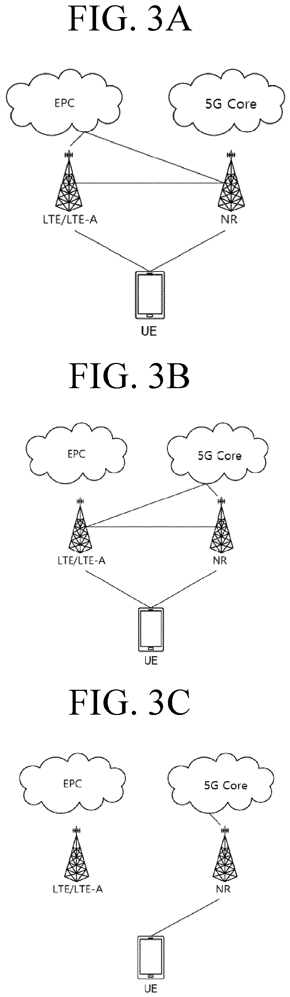

**FIGS. 3A to 3C** **illustrate exemplary architectures for a wireless communication service.**

Referring to FIG. 3A, a UE is connected in dual connectivity (DC) with an LTE/LTE-A cell and a NR cell.

The NR cell is connected with a core network for the legacy fourth-generation mobile communication, that is, Evolved Packet core (EPC).

Referring to FIG. 3B, the LTE/LTE-A cell is connected with a core network for 5th generation mobile communication, that is, a 5G core network.

A service provided by the architecture shown in FIGS. 3A and 3B is referred to as a non-standalone (NSA) service.

Referring to FIG. 3C, a UE is connected only with an NR cell. A service provided by this architecture is referred to as a standalone (SA) service.

In the new radio access technology (NR), the use of a downlink subframe for reception from a base station and an uplink subframe for transmission to the base station may be employed. This method may be applicable to both paired spectrums and unpaired spectrums. Paired spectrums involve two subcarriers designated for downlink and uplink operations. For example, one subcarrier within a pair of spectrums may include a pair of a downlink band and an uplink band.

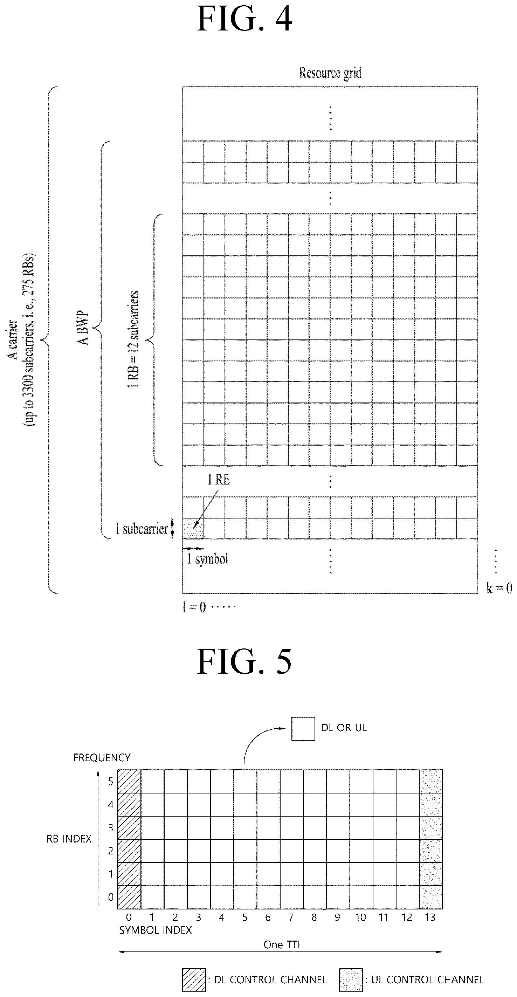

**FIG. 4** **illustrates a slot structure of an NR frame.**

A slot in the NR system includes a plurality of symbols in the time domain. For example, in the case of the normal CP, one slot includes seven symbols. On the other hand, in the case of the extended CP, one slot includes six symbols. A carrier includes a plurality of subcarriers in the frequency domain. A resource block (RB) is defined as a set of consecutive subcarriers (e.g., 12 consecutive subcarriers) in the frequency domain. A bandwidth part (BWP) is defined as a sequence of consecutive physical resource blocks (PRBs) in the frequency domain and may be associated with a specific numerology (e.g., SCS, CP length, etc.). A terminal may be configured with up to N (e.g., five) BWPs in each of downlink and uplink. Downlink or uplink transmission is performed through an activated BWP. Among the BWPs configured for the terminal, only one BWP may be activated at a given time. In the resource grid, each element is referred to as a resource element (RE), and one complex symbol may be mapped thereto.

**FIG. 5** **shows an example of a subframe type in NR.**

In NR (or new RAT), a Transmission Time Interval (TTI), as shown in FIG. 5, may be referred to as a subframe or slot. The subframe (or slot) may be utilized in a TDD system to minimize data transmission delay. As shown in FIG. 5, a subframe (or slot) includes 14 symbols. The symbol at the head of the subframe (or slot) may be allocated for a DL control channel, and the symbol at the end of the subframe (or slot) may be assigned for a UL control channel. The remaining symbols may be used for either DL data transmission or UL data transmission. This subframe (or slot) structure allows sequential downlink and uplink transmissions in one single subframe (or slot). Accordingly, downlink data may be received in a subframe (or slot) and uplink ACK/NACK may be transmitted in the same subframe (or slot).

Such a subframe (or slot) structure may be referred to as a self-contained subframe (or slot).

The first N symbols in a slot may be used to transmit a DL control channel and referred to as a DL control region, hereinafter. The last M symbols in the slot may be used to transmit a UL control channel and referred to as a UL control region. N and M are integers greater than 0. A resource region between the DL control region and the UL control region may be used for either DL data transmission or UL data transmission and referred to as a data region. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

Using this subframe (or slot) structure reduces the time required for retransmitting data that has failed in reception, thereby minimizing overall data transmission latency. In such a self-contained subframe (or slot) structure, a time gap may be required for transitioning between a transmission mode and a reception mode or from the reception mode to the transmission mode. To accommodate this, a few OFDM symbols when switch from DL to UL in the subframe structure may be configured to a guard period (GP).

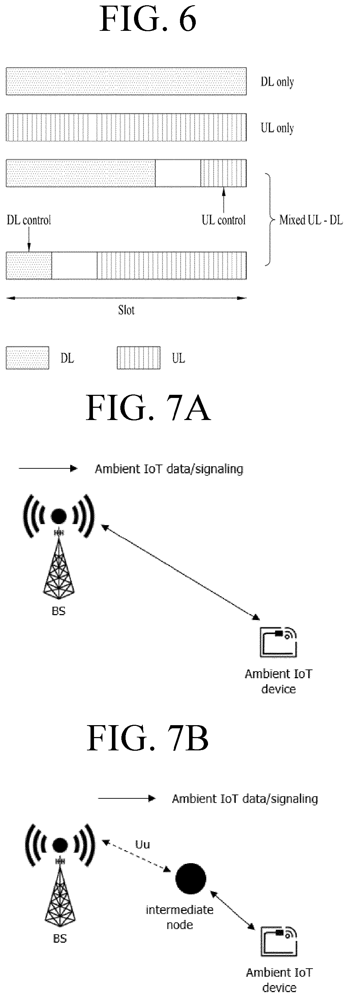

**FIG. 6** **illustrates a structure of a self-contained slot.**

In the NR system, the frames are structured as a self-contained structure, where one single slot includes a DL control channel, either a DL or UL data channel, and UL control channel. For example, the first N symbols in a slot may be used for transmitting a DL control channel and referred to as a DL control region. The last M symbols in the slot may be used for transmitting an UL control channel and referred to as a UL control region. N and M are integers greater than 0. A resource region between the DL control region and the UL control region may be used for either DL data transmission or UL data transmission and referred to as a data region.

For example, the following configurations may be considered. The durations are listed in temporal order.
1. DL only configuration
2. UL only configuration
3. Mixed UL-DL configuration

- DL region + Guard Period (GP) + UL control region
- DL control region + GP + UL region

DL region: (i) DL data region, (ii) DL control region + DL data region
UL region: (i) UL data region, (ii) UL data region + UL control region

A physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Through the PDCCH, Downlink Control Information (DCI), for example, DL data scheduling information or UL data scheduling data may be transmitted. Through the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A guard period (GP) provides a time gap during a process where a gNB and a UE transition from the transmission mode to the reception mode or a process where the gNB and UE transition from the reception mode to the transmission mode. Some symbols within a subframe that transition from DL to UL mode may be configured as the GP.

FIGS. 7A to 7E illustrate examples of connectivity topologies for ambient IoT networks and devices.

In recent years, IoT technology has gained significant attention in wireless communications. To enhance productivity in industries and improve quality of life, IoT technology has evolved to enable a greater number of interconnected devices. For example, 3GPP defines NB-IoT (Narrowband Internet of Things) and eMTC (enhanced Machine-Type Communication) technologies. However, to establish a more effective IoT ecosystem, improvements are needed in various aspects of IoT devices, including size, form factor, cost, complexity, power consumption, and coverage.

A representative technological service of IoT is RFID (Radio Frequency Identification). The advantages of RFID include its extremely low complexity, and RFID tags have a very small form factor. However, the reading distance of RFID is limited to only a few meters, providing very narrow coverage. Additionally, it is labor-intensive due to handheld scanning, and its deployment requires high costs due to the installation of RFID portals/gates. Therefore, RFID has limitations in providing seamless service and coverage in large-scale networks.

To meet these demands, 3GPP is studying use cases and scenarios for IoT devices that support battery-less operation or energy harvesting. Additionally, it is developing technologies to support IoT devices with higher requirements that cannot be met by existing IoT technologies.

For convenience of explanation, in this disclosure, an ambient IoT device may be referred to as an ambient IoT terminal, IoT device, IoT terminal, device, equipment, or terminal.

Connectivity topologies, such as those shown in FIGs. 7A to 7E, may be defined for ambient IoT networks and devices.

Referring to FIG. 7A, an ambient IoT device communicates directly and bidirectionally with a base station (BS). The communication between the base station and the ambient IoT device includes ambient IoT data and/or signaling. In the topology of FIG. 7A, the BS transmitting to the ambient IoT device may be different from the BS receiving from the ambient IoT device.

Referring to FIG. 7B, an ambient IoT device communicates bidirectionally with an intermediate node between the device and the base station (BS). In the topology of FIG. 7B, the intermediate node may be an ambient IoT-capable relay, an Integrated Access Backhaul (IAB) node, a UE, or a repeater. The intermediate node transmits ambient IoT data and/or signaling between the BS and the ambient IoT device.

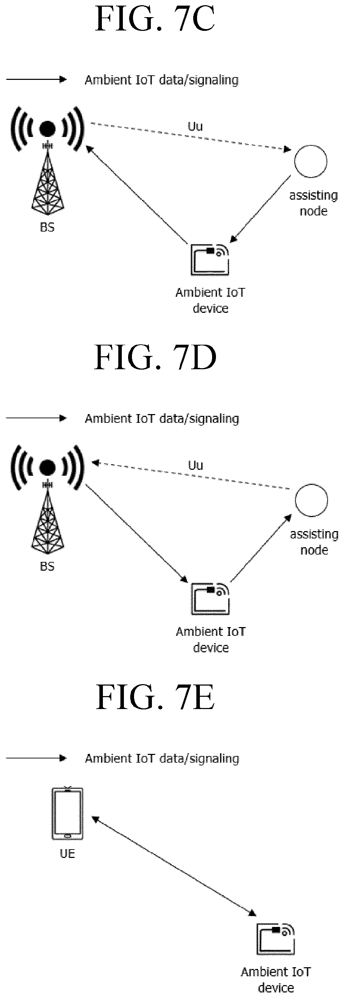

Referring to FIG. 7C, the ambient IoT device transmits data/signaling to the base station and receives data/signaling from the assisting node. Alternatively, as shown in FIG. 7D, the ambient IoT device receives data/signaling from the base station and transmits data/signaling to the assisting node. In the topology of FIGs. 7C to 7D, the assisting node may be a relay, IAB, UE, repeater, or other entity that enables the ambient IoT.

Referring to FIG. 7E, the ambient IoT device communicates bidirectionally with the UE. The communication between the UE and the ambient IoT device involves the transmission of ambient IoT data and/or signaling.

The Ambient IoT device may be classified into the following three types:
1) Device 1: ~1 µW peak power consumption, has energy storage, initial sampling frequency offset (SFO) up to 10X ppm, neither DL nor UL amplification in the device. The device's UL transmission is backscattered on a carrier wave provided externally.
2) Device 2a: ≤ a few hundred µW peak power consumption1, has energy storage, initial sampling frequency offset (SFO) up to 10X ppm, both DL and/or UL amplification in the device. The device's UL transmission may be backscattered on a carrier wave provided externally.
3) Device 2b: ≤ a few hundred µW peak power consumption1, has energy storage, initial sampling frequency offset (SFO) up to 10X ppm, both DL and/or UL amplification in the device. The device's UL transmission may be generated internally by the device.

Meanwhile, the channel from the device to the reader may be defined as the PDRCH (Physical Device to Reader Channel), and the channel from the reader to the device may be defined as the PRDCH (Physical Reader to Device Channel). The uplink transmission from the device may be referred to as D2R transmission, and the downlink transmission from the reader may be referred to as R2D transmission.

Among the three types of devices classified earlier, devices of type 1 and 2a may transmit data using backscattering through a carrier wave. This carrier wave may be transmitted by a reader, such as a base station or an intermediate UE, or through a node that radiates a new carrier wave. It is assumed that the carrier wave uses the same frequency band (DL or UL) as the D2R transmission.

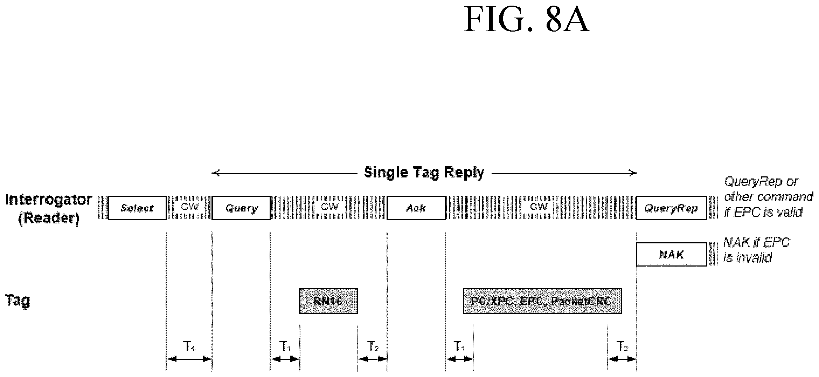

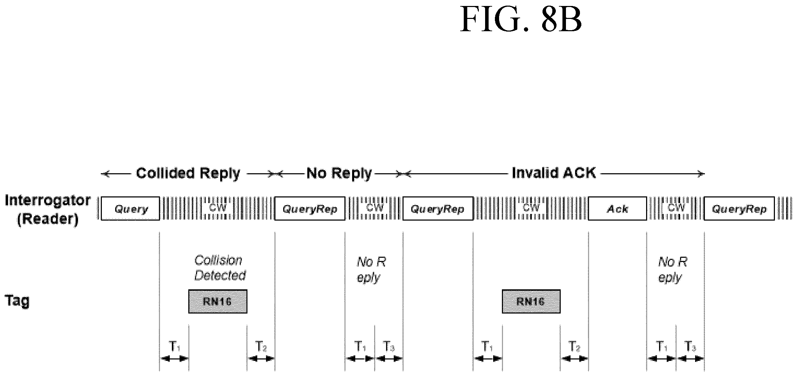

FIGS. **8A to 8B** **illustrate an example of a random** access **procedure for RFID.**

FIGS. 8A to 8B show examples of a random access procedure for UHF (Ultra High Frequency) RFID (Radio Frequency Identification) tags. Referring to FIGS. 8A to 8B, the interrogator (or reader) announces the start of a slot through the transmission of a query. The query includes a slot-count parameter, Q. Upon receiving the query, the tags select a random value within the range (0, 2^{Q}-1) and count the slots through the reception of messages such as query/queryRep/queryAdjust, along with the selected value. The Q defined in RFID is as follows.

Q: A parameter that an Interrogator uses to regulate the probability of Tag response. An Interrogator instructs Tags in an inventory round to load a Q-bit random (or pseudo-random) number into their slot counter; the Interrogator may also command Tags to decrement their slot counter. Tags reply when the value in their slot counter (e.g., their slot) is zero. Q is an integer in the range (0,15); the corresponding Tag-response probabilities range from 20 = 1 to 2-15 = 0.000031.

In FIGs. 8A to 8B, T1 represents the time during which the tag responds immediately after the transmission from the interrogator/reader, T2 represents the time during which the interrogator/reader transmits data after receiving the tag's response, T3 represents the time the interrogator/reader waits before transmitting another command after T1, and T4 represents the minimum wait time between two consecutive commands transmitted by the interrogator/reader. These times play a role in ensuring efficient communication between the interrogator/reader and the tag, as well as preventing collisions (e.g., reducing collisions).

Meanwhile, once the tag confirms the start of the slot it has selected, it may attempt to occupy the resources for data transmission by sending RN16. If multiple tags select the same slot, a collision occurs in the RN16 transmission. In this case, the tags will attempt transmission in a new slot. If no device attempts to occupy the resources, a "no reply" period occurs, and a new slot begins. Here, RN16 is a 16-bit random number (Random Number, 16-bit), which is an identification code used by the tag in the UHF RFID system when selecting a slot and responding to the reader.

Currently, 3GPP has decided to use slotted Aloha as the data transmission method for A (ambient)-IoT devices. Slotted Aloha is a method where data transmission is attempted at the start of one or more slots. If multiple devices transmit data at the same time in the same slot, a collision occurs. In such cases, the device detecting the collision will select one of the next slots to retry data transmission. Traditional RFID communication also uses a slotted Aloha-based communication technique, where communication is possible only when a single device transmits data in a given slot. However, when n devices randomly select slots to transmit data to the base station, even if they all select different slots without collision, there will still be a time delay of n*T (where T is defined as the time it takes for a device to successfully transmit data to the base station). If a collision occurs in a specific slot or if idle slots exist, the time for all devices to complete data transmission will be further delayed. For these reasons, the slotted Aloha-based access control procedure is most effective when ensuring that devices select different slots. In cases where devices select the same slot, data transmission is possible without collision for devices that choose different random numbers. Additionally, the duration of the slot time may vary depending on whether a device occupies the channel, whether a collision occurs between two or more devices, or whether the slot is idle. For this reason, in RFID communication, the Q value is decremented each time a query message is received, and the start of a new slot is counted to synchronize the slot start with the devices attempting data transmission. For 3GPP Ambient IoT devices, since they may also have dynamic slot lengths based on channel occupation and collision conditions, a new specific method is required to synchronize the start of each slot based on the NR frame structure and messages. Furthermore, when one or more devices attempt to occupy the same slot, it is necessary to support the resolution of contention between these devices, allowing more devices to transmit data in a single slot.

The present disclosure proposes a method of IoT devices to perform communication based on slotted Aloha competitive resources, where one or more competitive PDRCHs in the same time resource (i.e., slot) are configured in an FDM (Frequency Division Multiplexing) manner. These devices receive configuration information from the reader (e.g., a base station or intermediate terminal). Using this configuration information, the devices that have been assigned one or more slots (i.e., time resources) count the slots for the time resource. Specifically, when one or more RO (Random Access Occasion) exist within a single time slot through frequency division, the length of the slot may vary depending on the device's resource occupation and collision/idle state. In this case, a method is defined for counting the selected time slot region within the entire random access occasion (RO) area, either by performing an integrated count (e.g., aggregated count) for the n ROs divided by frequency or by performing individual counts based on the frequency division.

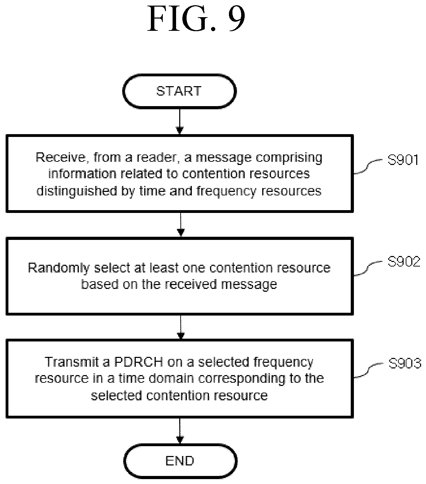

**FIG. 9** **is a flowchart illustrating an operation method of a terminal according to an embodiment of the disclosure.**

When a reader (e.g., a base station) wants to receive information stored in the devices from a specific group/session, the reader (e.g., a base station) sends a command message (e.g., broadcasting) over a frequency band corresponding to the specific group/session or an identifier indicating the group/session. This message triggers the devices belonging to the specified group/session within the inventory to transmit the stored data back to the base station. The devices belonging to the group/session attempt random access preferentially based on additional information included in the command message. The command message transmitted by the reader (base station or intermediate terminal) may include at least one of the following types of information.
- An identifier that indicates the triggered session or group;
- Information to indicate the range of valid time domain opportunities for the session or to indicate the range for all RA (random access) occasions (x or Q); where Q represents the number of RA opportunity resources expressed as 2^{Q}, and may indicate a value for the time domain only, or a value for the entire resource divided by both time and frequency domains.
- Information to indicate the range of frequency domain opportunities that can be attempted within any specific time opportunity for the session (y); where this information (y) may include an offset value for frequency shift. For Device 1 and/or Device 2a types, different ROs may be distinguished using an offset value based on a carrier wave (CW), and for Device 2b types, different ROs may be distinguished using an offset value based on the frequency band of the first PDRCH resource.
- The range of random numbers to randomly distinguish devices transmitting data in one RO selected by x and/or y

Referring to FIG. 9, the terminal receives a message from the reader that includes information related to the contention resources distinguished by time and frequency resources (S901). This message may be the command message described earlier. Based on the received message, the terminal randomly selects at least one contention resource (S902). Then, the terminal performs a PDRCH transmission on the selected frequency resource within the corresponding time domain of the selected contention resource (S903).

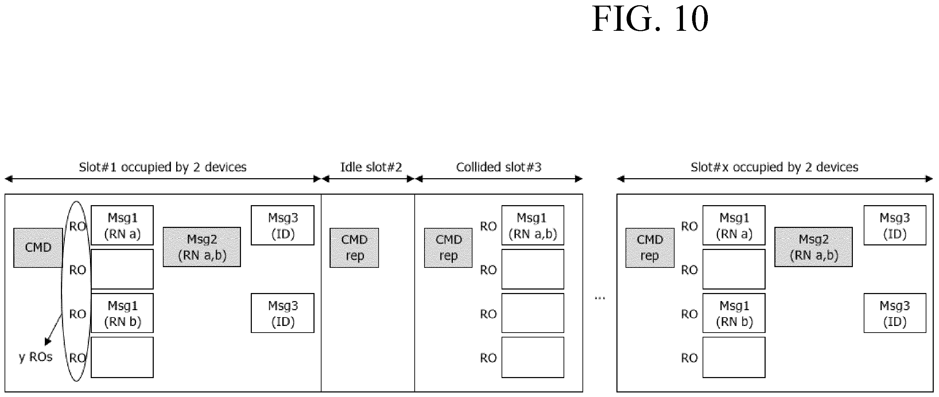

FIG. 10 is a diagram for explaining an operation scheme based on Random access Occasions (ROs) and slots according to an embodiment of the disclosure.

Unlike NR, which allocates resources based on synchronized time resources according to a frame structure divided by absolute time information, Internet of Things (IoT) devices dynamically determine the length of each slot depending on the device's resource occupation success, or whether the slot is idle or a collision slot. Therefore, as shown in FIG. 10, devices that select a random slot should be able to count the start of a specific slot (i.e., the starting position of the resource occupation attempt) by receiving a signal/information/identifier that enables them to recognize the beginning of the selected slot.

Unlike the typical method where only one tag may occupy a resource within a single time slot, some devices are designed to occupy resources in different frequency domains within the same time slot. In such case, if a single response message is transmitted by the reader (e.g., via broadcasting), a problem may occur. Specifically, devices that have selected different Random Access Occasions (ROs) may not be distinguishable if they choose the same Random Number (RN). In other words, if devices that select different ROs transmit different RNs, the reader may distinguish between them. This allows for contention resolution. However, if specific RO information is not included in the integrated message, there is no way to differentiate between them. That is, when resources in different frequency domains are assigned to devices that select different ROs within the same slot, multiple devices may communicate simultaneously through a single slot. In this case, an additional method is required to distinguish between devices that select different ROs. The present disclosure proposes a method for counting the slots in such a data transmission system, selecting frequency resources for the slot, choosing an RN based on the selected time/frequency resources, and performing data transmission/reception through a random access method accordingly.

### <Scheme 1. Method for RO, Slot, and RN Selection through Integrated CMD Reception>

The RA (random access) resources allocated for receiving information from devices belonging to any session/group may be set through messages transmitted by the base station/intermediate UE (hereinafter referred to as the reader). That is, the reader sends a message containing information indicating the number of RA resources (2^{Q}) that A-IoT devices can attempt and the number of distinguishable resources (RO) within the same time resource (y), to signal the initiation of the RA procedure for any session/group. A-IoT devices belonging to the same session/group select a random slot count within the range of (0, 2^{Q}). Specifically, the reader provides a parameter indicating the total number of ROs that A-IoT devices may attempt, which is 2^{Q} (= x * y, or indicating Q and y), and the A-IoT device(s) randomly select a slot count within the range of (0, 2^{Q}-1).

In this case, if devices selecting different ROs within the same time resource choose different RNs (#a, #b), the base station may resolve this by transmitting the next message (Message 3, Msg3) over resources in different frequency regions. Specifically, the base station may assign UL grants for different RNs #a and #b using a single message (Message 2, Msg2). This may be done implicitly by instructing the transmission of Msg3 through the same frequency resources (e.g., frequency shift) as the previously selected RO, based on the RN. Alternatively, the base station may assign new frequency resources (e.g., an offset setting for frequency shift) for each RN #a and #b. It may then instruct the devices to transmit Msg3 through specific frequency resources. To achieve this, the present disclosure proposes a method to reduce the collision probability among devices by assigning different RN ranges to different ROs. This ensures that the RNs of devices selecting different ROs within the same slot do not overlap. In other words, if there are y ROs in a slot, and the range of RNs that any device may choose for each RO is (0, 2ⁿ-1), the RN range will be sequentially allocated. This allocation may begin from the lowest or highest number of the RO, dividing 2ⁿ/y for each. Devices will then randomly select an RN within the range corresponding to the RO they choose. The command (CMD)/command repeat (CMDrep) message transmitted by the base station must include a parameter (y) indicating the number of ROs for each slot.

Alternatively, even if devices selecting different ROs within the same time resource choose the same RN, the base station may differentiate between these devices by including an indicator in Msg2. This indicator directs that the RNs correspond to resources in different frequency regions. The base station may indicate this by including an index, indicator, or frequency information related to the selected ROs in Msg2. In this case, the device uses not only the selected RN but also the RO indicator. Based on the RO, the device is implicitly instructed that the resource occupation was successful. It is also instructed to transmit Msg3 through the same frequency resources (e.g., frequency shift) as the previously selected RO. Alternatively, the base station may assign new frequency resources for each RO (e.g., an offset setting for frequency shift). It may then instruct the devices to transmit Msg3 through specific frequency resources.

Depending on the method for selecting the RO, two different slot count options, as described below, may be applied.

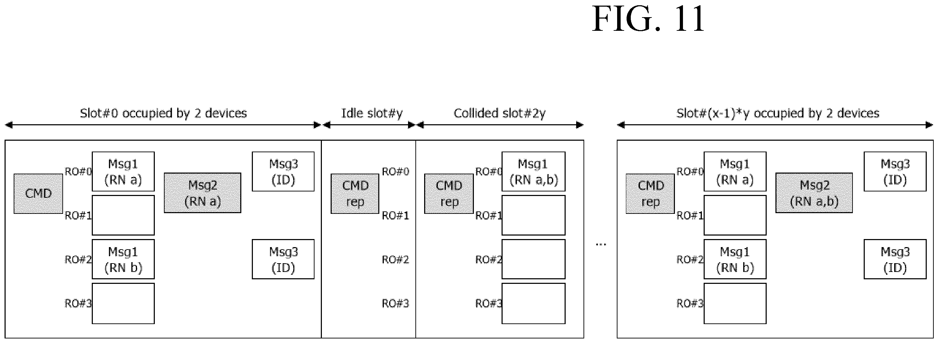

FIG. 11 is a diagram for explaining a random access scheme according to an embodiment of the disclosure.

### <Scheme 1-1. Selecting a single slot value within the range (0, 2^{Q}-1) and subtracting slot counts by y>

Based on the proposed scheme 1-1, Ambient IoT (A-IoT) devices that operate under this method receive a message indicating the start of communication for a specific session/group. This message informs them of the total number of RO available for the session/group (Q). From this set (i.e., range (0, 2^{Q}-1)), the device randomly selects one RO. When multiple ROs exist within a single time resource (slot), the device receives a CMD or CMDrep message that includes a parameter (y) indicating this. The device then counts the slot by y each time such a message is received. The device checks which slot the selected RO belongs to.

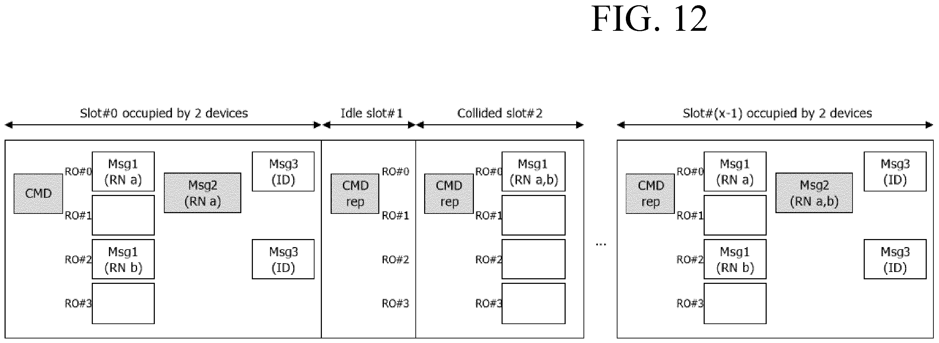

FIG. 12 is a diagram for explaining a random access scheme according to another embodiment of the disclosure.

### <Scheme 1-2: Selecting a single slot value within the range (0, 2^{Q}-1), decrementing the slot count by 1, and then randomly selecting an RO within the range (0, y-1)>

Based on the proposed scheme 1-2, the Ambient IoT (A-IoT) devices operating according to this method receive a message indicating the start of communication for an arbitrary session/group. This message informs them of the total number of slots (Q) accessible to devices in that session/group. The device randomly selects one slot from the range (0, 2Q-1). Whenever the A-IoT device receives a CMD or CMDrep message, it counts the slot count by 1 and checks the slot corresponding to the selected RO. Once the A-IoT device confirms it has selected the correct slot, it chooses one of the available ROs and sends a Msg1 including one of the RNs corresponding to the selected RO. For example, an A-IoT device receiving a CMD message containing Q=4 and y=4 randomly selects a slot and RO within the ranges (0, 2^{Q}-1) and (0, y-1), respectively. If the device selects slot count #8 and RO #2, it sets the slot count to 8 after receiving the first CMD message. The device decrements the slot count by 1 each time it receives a CMD/CMDrep message. When the slot count reaches 0, the device selects one of the RNs corresponding to RO #2 and sends a Msg1 using the resources of RO #2. When the Msg1 transmission to the selected RO is successful, the reader sends an integrated Msg2 message containing one or more different RNs successfully received from the device. The A-IoT devices receiving the Msg2, which includes their selected RN, will then send Msg3 to the reader based on the resource information corresponding to each RN.

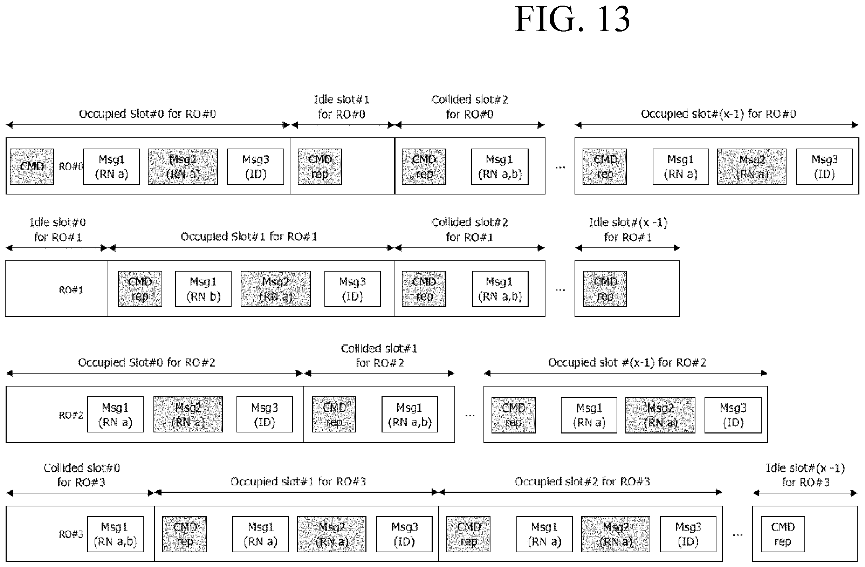

FIG. 13 is a diagram for explaining a random access scheme according to still another embodiment of the disclosure.

### <Scheme 2. Multi-slot Count through Reception of Individual CMD Corresponding to Frequency Domain>

The RA (random access) resources set for receiving information from devices belonging to a specific session/group may be configured through messages transmitted by the base station/intermediate UE (referred to as the reader). Specifically, the reader transmits a message that includes information on the number of RA resources (2Q) available for A-IoT devices and the number of distinguishable resources (RO) within the same time resource (y) to initiate the RA procedure for a specific session/group. A-IoT devices belonging to the session/group first select a random RO within the range (0, y-1). Then, the A-IoT devices select a random slot count within the frequency resource of the selected RO, within the range (0, 2^{Q}). In other words, the reader provides a parameter indicating the total number of RO attempts available for A-IoT devices, which is 2^{Q} (= x*y, or Q and y). The A-IoT devices first randomly select an RO count within the range (0, y-1) and then select a random slot count within the range (0, 2^{Q}-1).

Based on the proposed scheme 2, A-IoT devices operating in this manner receive a message indicating the number of slots (Q) and the number of ROs (y) available for the devices in the session/group. This message signals the start of communication for a specific session/group. The devices then randomly select resources in two domains, namely RO and slot count. Specifically, they randomly choose an RO# within the range (0, y-1) and a slot count within the range (0, 2^{Q}-1). The A-IoT device is suggested to count the slots based on receiving CMD/CMDrep messages transmitted in the frequency band corresponding to the selected RO#. In other words, each time the A-IoT device receives a CMD/CMDrep message (or one containing the RO#) transmitted in the resource domain corresponding to the chosen RO, it counts the slot count by 1. It then verifies if it has selected the correct slot. Once the A-IoT device confirms the selected slot, it transmits Msg1 containing a randomly selected RN through the corresponding RO.

For example, when an A-IoT device receives the first CMD message containing Q=4 and y=4, it randomly selects a slot within the range (0~2^{Q}-1) and an RO within the range (0~y-1). If the A-IoT device selects slot count #8 and RO #2, it sets the slot count to 8 upon receiving the first CMD message. The device then verifies whether it receives a CMD/CMDrep message that can be transmitted in the frequency resource corresponding to the selected RO #2. If the device receives the CMD/CMDrep message, it decreases its slot count by 1 each time. Once the slot count reaches 0, it selects an RN and transmits Msg1, which includes the selected RN, using the frequency resource corresponding to RO #2. If the Msg1 transmission through the selected RO is successfully carried out, the reader sends Msg2 containing the successfully received RN from the device. The A-IoT device(s) that receive Msg2, including the selected RN, then transmit Msg3 to the reader based on the resource information corresponding to the RN.

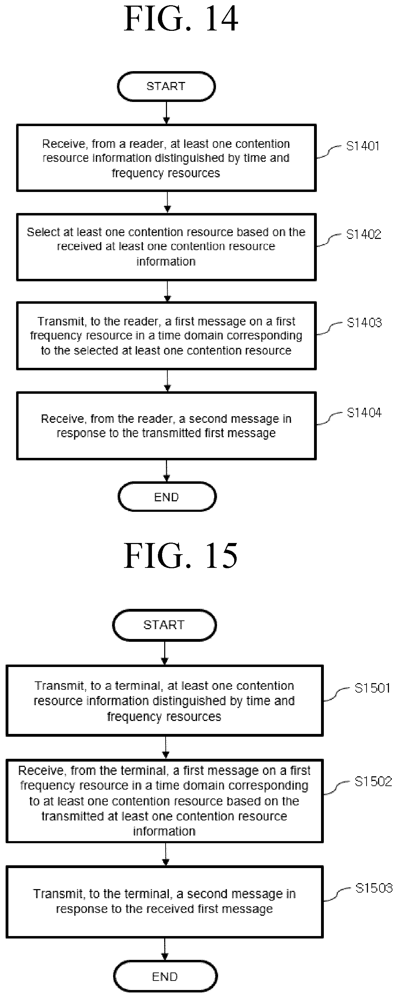

**FIG. 14** **is a flowchart illustrating an operation method of a terminal according to another embodiment of the disclosure.**

Referring to FIG. 14, the terminal receives at least one contention resource information, which is distinguished by time and frequency resources, from the reader (S1401). Based on the received at least one contention resource information, the terminal selects at least one contention resource (S1402). Then, the terminal transmits a first message to the reader on a first frequency resource in a time domain corresponding to the selected at least one contention resource (S1403). Here, the first message may include information triggered by the received at least one contention resource information. Subsequently, the terminal receives a second message from the reader in response to the transmitted first message (S1404).

The second message may be used as a response to multiple first messages from different terminals.

Meanwhile, the reception of the second message may be determined as successful based on the triggered information. Through this, the terminal may transmit a third message based on the first frequency resource on which the first message was transmitted. Alternatively, the terminal may transmit a third message to the reader based on a second frequency resource. Here, information on the second frequency resource may be included in the second message.

The triggered information included in the first message may be randomly selected random number information within a random number range. Here, the random number range may be distinguished according to a frequency domain and set to different non-overlapping values.

**FIG. 15** **is a flowchart illustrating an operation method of a reader according to an embodiment of the disclosure.**

Referring to FIG. 15, the reader transmits at least one contention resource information, which is distinguished by time and frequency resources, to the terminal (S1501). Then, the reader receives a first message from the terminal on a first frequency resource in a time domain corresponding to at least one contention resource based on the transmitted at least one contention resource information. Here, the first message may include information triggered by the transmitted at least one contention resource information. Subsequently, the reader transmits a second message to the terminal in response to the received first message (S 1503).

The second message may be used as a response to multiple first messages from different terminals.

Meanwhile, the reader may receive a third message from the terminal based on the first frequency resource where the first message was received. Alternatively, the reader may receive a third message from the terminal based on a second frequency resource. Here, information on the second frequency resource may be included in the second message.

The triggered information included in the first message may be randomly selected random number (RN) information within a random number range. Here, the random number range may be distinguished according to a frequency domain and set to different non-overlapping values.

The embodiments described up to now may be implemented through various means. For example, the embodiments may be implemented by hardware, firmware, software, or a combination thereof. Details will be described with reference to the accompanying drawings.

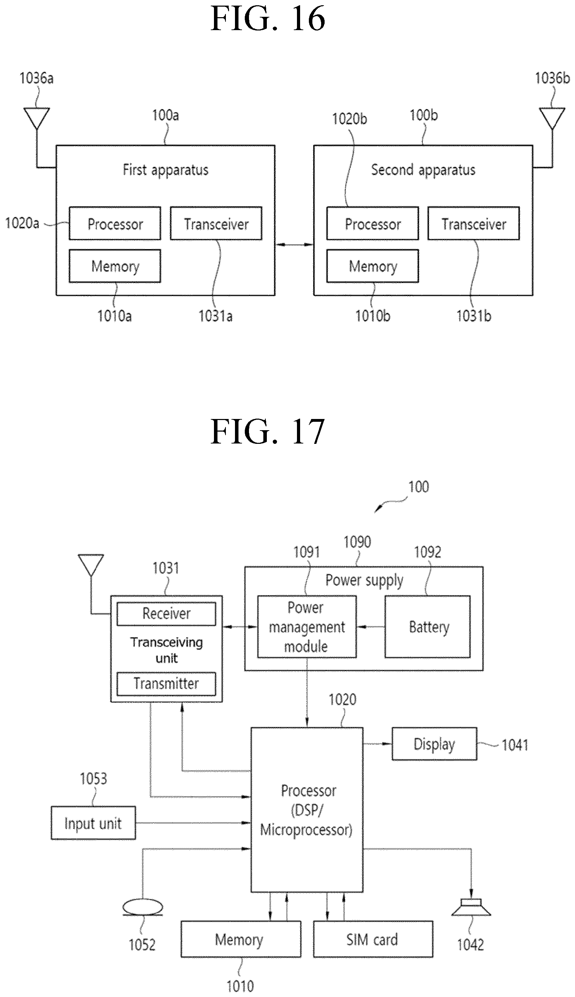

**FIG. 16** **is a block diagram showing apparatuses according to an embodiment of the disclosure.**

Referring to FIG. 16, a wireless communication system may include a first apparatus 100a and a second apparatus 100b.

The first apparatus 100a may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 1031a. The processor 1020a may be tasked with executing the previously mentioned functions, procedures, and/or methods. The processor 1020a may be capable of implementing one or more protocols. For example, the processor 1020a may perform and manage one or more layers of a radio interface protocol. The memory 1010a may be connected to the processor 1020a, and configured to store various types of information and/or instructions. The transceiver 1031a may be connected to the processor 1020a, and controlled to transceive radio signals.

The second apparatus 100b may include at least one processor such as a processor 1020b, at least one memory device such as a memory 1010b, and at least one transceiver such as a transceiver 1031b. The processor 1020b may be tasked with executing the previously mentioned functions, procedures, and/or methods. The processor 1020b may be capable of implementing one or more protocols. For example, the processor 1020b may manage one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected inside or outside the processor 1020a and/or the processor 1020b and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

**FIG. 17** **is a block diagram showing a terminal according to an embodiment of the disclosure.**

In particular, FIG. 17 illustrates the previously described apparatus of FIG. 16 in more detail.

The apparatus includes a memory 1010, a processor 1020, a transceiving unit 1031 (e.g., transceiving circuit), a power management module 1091 (e.g., power management circuit), a battery 1092, a display 1041, an input unit 1053 (e.g., input circuit), a loudspeaker 1042, a microphone 1052, a subscriber identification module (SIM) card, and one or more antennas. Some of constituent elements is referred to as a unit in the disclosure. However, the embodiments are not limited thereto. For example, such term "unit" is also referred to as a circuit block, a circuit, or a circuit module.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®}, KIRIN^{™} series of processors made by HiSilicon^{®}, or the corresponding next-generation processors.

The power management module 1091 manages a power for the processor 1020 and/or the transceiver 1031. The battery 1092 supplies power to the power management module 1091. The display 1041 outputs the result processed by the processor 1020. The input unit 1053 may be an individual circuit that receives an input from a user or other devices and convey the received input with associated information to the processor 1020. However, the embodiments are not limited thereto. For example, the input unit 1053 may be implemented as at least one of touch keys or buttons to be displayed on the display 1041 when the display 1041 is capable of sensing touches, generating related signals according to the sensed touches, and transferring the signals to the processor 1020. The SIM card is an integrated circuit used to securely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. The embodiments described in the disclosure may be implemented as software program or application. In this case, such software program or application may be stored in the memory 1010. In response to a predetermined event, the software program or application stored in the memory 1010 may be fetched and executed by the processor 1020 for performing the function and the method described in this disclosure. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020, receives, and transmits a radio signal under control of the processor 1020. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives audio input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

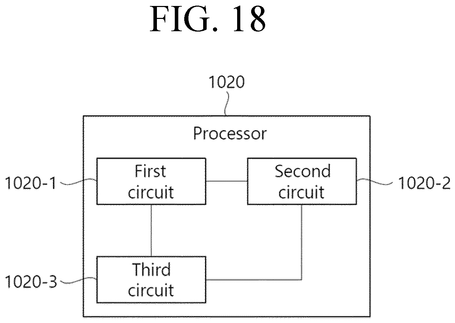

**FIG. 18** **is a block diagram of a processor in accordance with an embodiment.**

Referring to FIG. 18, a processor 1020 may include a plurality of circuitry to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP) and may include at least one of a digital signal processor (DSP), a central processing unit (CPU), and a graphics processing unit (GPU).

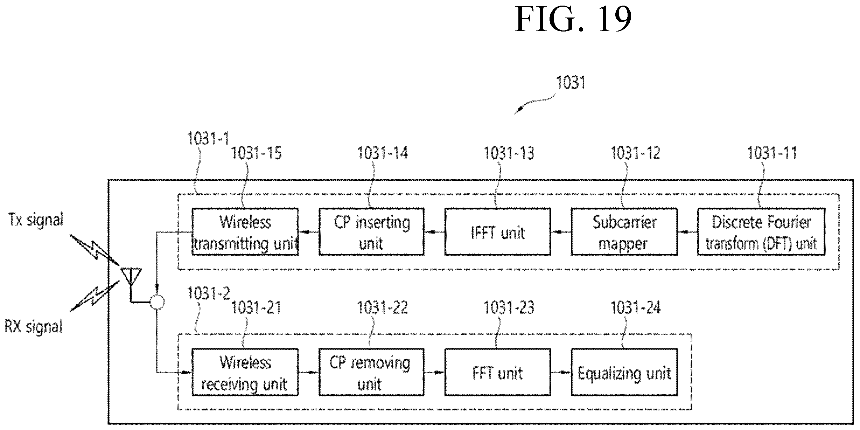

**FIG. 19** **is a detailed block diagram of a transceiver of a first apparatus shown in** **FIG. 16** **or a transceiving unit of an apparatus shown in** **FIG. 17****.**

Referring to FIG. 19, the transceiving unit 1031 (e.g., transceiving circuit) includes a transmitter 1031-1 and a receiver 1031-2. The transmitter 1031-1 includes a discrete Fourier transform (DFT) unit 1031-11 (e.g., DFT circuit), a subcarrier mapper 1031-12 (e.g., subcarrier mapping circuit), an IFFT unit 1031-13 (e.g., IFFT circuit), a cyclic prefix (CP) insertion unit 1031-14 (e.g., CP insertion circuit), and a wireless transmitting unit 1031-15 (e.g., wireless transmitting circuit). The transmitter 1031-1 may further include a modulator. Further, the transmitter 1031-1 may for example include a scramble unit (e.g., scrambling circuit), a modulation mapper, a layer mapper, and a layer permutator, which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13. Some of constituent elements is referred to as a unit in the disclosure. However, the embodiments are not limited thereto. For example, such term "unit" is also referred to as a circuit block, a circuit, or a circuit module.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21 (e.g., wireless receiving circuit), a CP removing unit 1031-22 (e.g., CP removing circuit), an FFT unit 1031-23 (e.g., FFT circuit), and an equalizing unit 1031-24 (e.g., equalizing circuit). The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

According to the embodiments of the disclosure, in a wireless communication system using the Slotted ALOHA scheme to transmit data, the opportunities may be expanded for multiple terminals (e.g., IoT devices) to occupy resources within the same time resources (e.g., time interval), thereby minimizing collisions between terminals, shortening the overall data reception time, and improving data transmission and reception performance.

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

## Claims

1. A method of a terminal to operate in a wireless communication system, the method comprising:
receiving, from a reader, at least one contention resource information distinguished by time and frequency resources;
selecting at least one contention resource based on the received at least one contention resource information;
transmitting, to the reader, a first message on a first frequency resource in a time domain corresponding to the selected at least one contention resource, wherein the first message includes information triggered by the received at least one contention resource information; and
receiving, from the reader, a second message in response to the transmitted first message.

2. The method of claim 1, wherein the second message is used as a response to multiple first messages from different terminals.

3. The method of claim 1, wherein the reception of the second message is determined as successful based on the triggered information.

4. The method of claim 3, further comprising:
transmitting a third message based on the first frequency resource on which the first message was transmitted.

5. The method of claim 3, further comprising:
transmitting a third message based on a second frequency resource,
wherein information on the second frequency resource is included in the second message.

6. The method of claim 1, wherein the triggered information is information on a randomly selected random number within a random number range.

7. The method of claim 6, wherein the random number range is distinguished according to a frequency domain and is set to different non-overlapping values.

8. A method of a reader to operate in a wireless communication system, the method comprising:
transmitting, to a terminal, at least one contention resource information distinguished by time and frequency resources;
receiving, from the terminal, a first message on a first frequency resource in a time domain corresponding to at least one contention resource based on the transmitted at least one contention resource information, wherein the first message includes information triggered by the received at least one contention resource information; and
transmitting, to the terminal, a second message in response to the received first message.

9. The method of claim 8, wherein the second message is used as a response to multiple first messages from different terminals.

10. The method of claim 8, further comprising:
receiving a third message based on the first frequency resource on which the first message was received.

11. The method of claim 8, further comprising:
receiving a third message based on a second frequency resource,
wherein information on the second frequency resource is included in the second message.

12. The method of claim 8, wherein the triggered information is information on a randomly selected random number within a random number range.

13. The method of claim 12, wherein the random number range is distinguished according to a frequency domain and is set to different non-overlapping values.

14. A terminal in a wireless communication system, comprising:
at least one processor; and
at least one memory configured to store instructions and operably electrically connectable to the at least one processor,
wherein operations performed based on the instructions executed by the at least one processor comprise:
receiving, from a reader, at least one contention resource information distinguished by time and frequency resources;
selecting at least one contention resource based on the received at least one contention resource information;
transmitting, to the reader, a first message on a first frequency resource in a time domain corresponding to the selected at least one contention resource, wherein the first message includes information triggered by the received at least one contention resource information; and
receiving, from the reader, a second message in response to the transmitted first message.

15. The terminal of claim 14, wherein the second message is used as a response to multiple first messages from different terminals.
